# EUROPEAN PATENT APPLICATION

(11) **EP 4 113 333 A1**
(43) Date of publication of application: **04.01.2023**
(21) Application number: 21211634.7
(22) Date of filing: 01.12.2021
(51) Int. Cl.: G06F 21/10, G06Q 10/10

(54) **INFORMATION PROCESSING APPARATUS, INFORMATION PROCESSING PROGRAM, AND INFORMATION PROCESSING METHOD**

(30) Priority: 29.06.2021 JP 2021107794
(71) Applicant: FUJIFILM Business Innovation Corp., Minato-ku Tokyo (JP)
(72) Inventor: MATSUI, Haruki, Yokohama-shi (JP)
(74) Representative: Becker, Eberhard

(57) **Abstract**

An information processing apparatus including a processor configured to acquire information related to management authority representing which device of plural devices to be managed is under management of which administrator of plural administrators, set employment priority to employ a license of an application to be installed and used for the plural devices, acquire license information representing the license of the application owned by each of the plural administrators, and employ a license owned by a first administrator for a device other than a device under management of the first administrator among the plural administrators according to the employment priority.

## Description

### BACKGROUND OF THE INVENTION

### (i) Field of the Invention

The present invention relates to an information processing apparatus, an information processing program, and an information processing method.

### (ii) Description of Related Art

JP2012-022621A describes an image forming apparatus in which activation of a program that realizes a function is approved by license information indicating that a user is a legitimate user of the program. The image forming apparatus includes a login receiving unit that receives user login, a program storage unit that stores the program, a function introduction unit that acquires the program licensed to an individual user and license information from the outside and stores the acquired program and license information in the program storage unit, a user information storage unit that stores user information in which the license information of the program stored by the function introduction unit is registered in association with a user ID, a deletion timing receiving unit that receives setting of a deletion timing at which the program stored by the function introduction unit is deleted from the program storage unit, and a deletion timing receiving unit, and a deletion unit that deletes the program stored in the program storage unit by the function introduction unit in a case where the deletion timing received by the deletion timing receiving unit arrives.

JP2012-234525A describes an information processing apparatus including an installation unit that downloads and installs installation data of software corresponding to a predetermined function from the outside, a license file acquisition unit that acquires a license file from the outside to activate the function, a license presence or absence management unit that manages the presence or absence of a license for the function separately from the presence or absence of the license file, a use protection management unit that manages, in a case where the maximum number of uses for which the function can be used with the license file is defined, the number of use protections for which the function cannot be used by another device within a range of available number obtained by subtracting the actual number of uses from the maximum number of uses, a license movement unit that moves the license between devices and updates the presence or absence of the license for the corresponding function, and a function control unit that controls the use of the function from the maximum number of uses and the number of use protections.

### SUMMARY OF THE INVENTION

One of license employment methods for executing an application is a serial license method in which one license is employed for each device. In license management of the application that employs the serial license method, a user having the management authority of the application for the device needs to explicitly select the device and assign the license as appropriate according to the number of devices and the number of licenses.

For example, even though a certain user purchases the license for the number of devices managed by the user, the number of licenses may be surplus in a case where the number of operating devices decreases due to a use situation of the devices. On the other hand, even though another administrator purchases the licenses for the number of devices managed by the administrator, the number of licenses may be insufficient for the devices managed by the administrator in a case where the number of devices to be managed is added.

An object of the present invention is to provide an information processing apparatus, an information processing program, and an information processing method capable of effectively using a license as compared with a case where an administrator employs a license only to a device managed by the administrator.

According to a first aspect of the present disclosure, there is provided an information processing apparatus including a processor configured to acquire information related to management authority representing which device of a plurality of devices to be managed is under management of which administrator of a plurality of administrators, set employment priority to employ a license of an application to be installed and used for the plurality of devices, acquire license information representing the license of the application owned by each of the plurality of administrators, and employ a license owned by a first administrator for a device other than a device under management of the first administrator among the plurality of administrators according to the employment priority.

According to a second aspect of the present disclosure, there is provide the information processing apparatus, in which the processor may be configured to employ the license owned by the first administrator for a second device under the management of a second administrator among the plurality of administrators in a case where the employment priority set for a first device under management of the first administrator is lower than the employment priority of the second device.

According to a third aspect of the present disclosure, there is provide the information processing apparatus, in which the processor may be configured to set the employment priority based on use frequency of the device.

According to a fourth aspect of the present disclosure, there is provide the information processing apparatus, in which the processor may be configured to set the use frequency of the device based on at least one of the number of users, an operation rate, or a use situation of the device.

According to a fifth aspect of the present disclosure, there is provide the information processing apparatus, in which the processor may be configured to set the employment priority according to the use frequency of the device in a predetermined period.

According to a sixth aspect of the present disclosure, there is provide the information processing apparatus, in which the processor may be configured to receive update of the employment priority and set the employment priority according to the use frequency of the device in the predetermined period based on a change of the employment priority.

According to a seventh aspect of the present disclosure, there is provide the information processing apparatus, in which the processor may be configured to cancel the employment of the license for a third device among the plurality of devices in a case where the license is already employed, before the license is employed, for the third device and the employment priority set for the third device is lower than the employment priority set for a fourth device for which the license is not employed among the plurality of devices.

According to an eighth aspect of the present disclosure, there is provide the information processing apparatus, in which the processor may be configured to display a warning to the administrator having the management authority for a predetermined period before the employment of the license is canceled.

According to a ninth aspect of the present disclosure, there is provide the information processing apparatus, in which the processor may be configured to employ the license for which the employment is canceled, for the fourth device.

According to a tenth aspect of the present disclosure, there is provide the information processing apparatus, in which the processor may be configured to set a range in which the license of the application owned by the administrator is employable for the device other than the device under the management of the administrator for each application or each device.

According to an eleventh aspect of the present disclosure, there is provide the information processing apparatus, in which the processor may be configured to display the license information and information on the device for which the license information is employed.

According to a twelfth aspect of the present disclosure, there is provided an information processing program causing a computer to execute a process including acquiring information related to management authority representing which device of a plurality of devices to be managed is under management of which administrator of a plurality of administrators, setting employment priority to employ a license of an application to be installed and used for the plurality of devices, acquiring license information representing the license of the application owned by each of the plurality of administrators, and employing a license owned by a first administrator for a device other than a device under management of the first administrator among the plurality of administrators according to the employment priority.

According to a thirteenth aspect of the present disclosure, there is provided an information processing method including acquiring information related to management authority representing which device of a plurality of devices to be managed is under management of which administrator of a plurality of administrators, setting employment priority to employ a license of an application to be installed and used for the plurality of devices, acquiring license information representing the license of the application owned by each of the plurality of administrators, and employing a license owned by a first administrator for a device other than a device under management of the first administrator among the plurality of administrators according to the employment priority.

With the information processing apparatus according to the first aspect of the present invention, the license can be effectively used as compared with the case where the administrator employs the license only for the device managed by the administrator.

With the information processing apparatus according to the second aspect of the present invention, the license can be employed for the device having relatively high employment priority based on the employment priority, even for the device outside the management authority.

With the information processing apparatus according to the third aspect of the present invention, the license can be employed for the device having the high use frequency.

With the information processing apparatus according to the fourth aspect of the present invention, the employment priority can be set according to the use record of the device.

With the information processing apparatus according to the fifth aspect of the present invention, the employment priority can be set only for the predetermined period.

With the information processing apparatus according to the sixth aspect of the present invention, the license can be employed based on the employment priority in the latest situation of the device.

With the information processing apparatus according to the seventh aspect of the present invention, the license can be more effectively used by not only the employment of the license but also the cancellation of the employment of the license.

With the information processing apparatus according to the eighth aspect of the present invention, the employment of the license for the device can be prevented from being canceled without knowledge of the administrator.

With the information processing apparatus according to the ninth aspect of the present invention, the license can be more effectively used by reemploying the surplus license for which the employment is canceled for the device having the higher employment priority.

With the information processing apparatus according to the tenth aspect of the present invention, the administrator can select the employable range of the license, and thus the license can be effectively used more in line with the current situation.

With the information processing apparatus according to the eleventh aspect of the present invention, the latest license employment situation can be visually recognizable.

With the information processing program according to the twelfth aspect of the present invention, the license can be effectively used as compared with the case where the administrator employs the license only for the device managed by the administrator.

With the information processing method according to the thirteenth aspect of the present invention, the license can be effectively used as compared with the case where the administrator employs the license only for the device managed by the administrator.

### BRIEF DESCRIPTION OF THE DRAWINGS

Exemplary embodiment(s) of the present invention will be described in detail based on the following figures, wherein:
Fig. 1 is a diagram showing an outline of an entire information processing system according to the present exemplary embodiment;
Fig. 2 is a diagram showing an example of employment of a license by a serial license method;
Fig. 3 is a diagram showing an example of employment of a license using an information processing apparatus according to the present exemplary embodiment;
Fig. 4 is a block diagram showing a hardware configuration of the information processing apparatus according to the present exemplary embodiment;
Fig. 5 is a block diagram showing a functional configuration of the information processing apparatus according to the present exemplary embodiment;
Fig. 6 is a table showing an example of information related to management authority;
Fig. 7 is a table showing an example of information related to a license;
Fig. 8 is a table showing an example of information related to setting of employment priority;
Fig. 9 is a diagram showing a display example related to an employment situation of a license; and
Fig. 10 is a flowchart representing processing of an information processing apparatus according to the present exemplary embodiment.

### DETAILED DESCRIPTION OF THE INVENTION

Hereinafter, an example of exemplary embodiments according to the disclosed technique will be described in detail with reference to drawings.

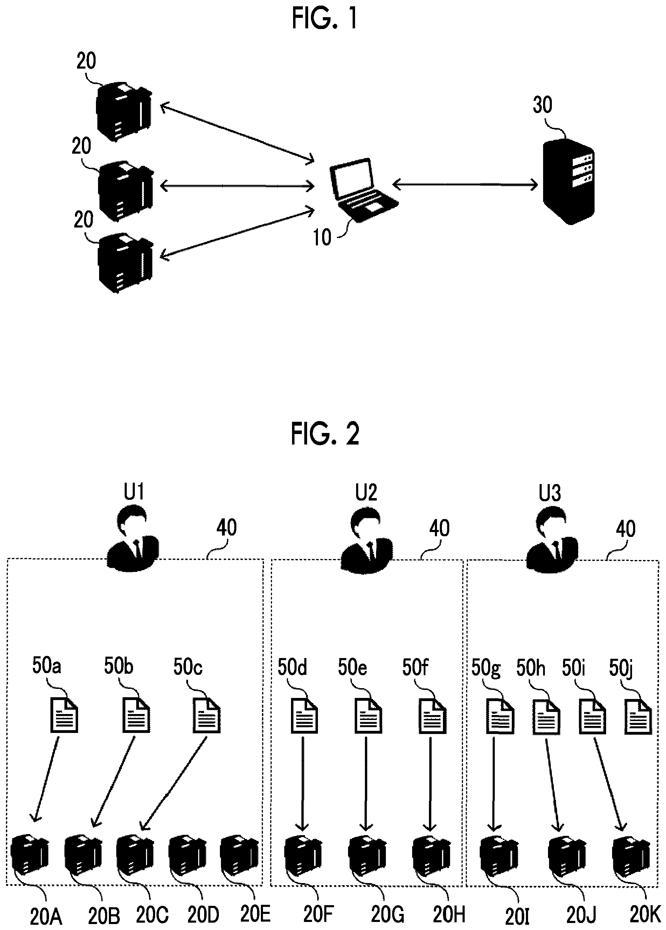

Fig. 1 is a diagram showing an outline of an entire information processing system including an information processing apparatus 10 according to the present exemplary embodiment. As shown in Fig. 1, the information processing system according to the present exemplary embodiment includes the information processing apparatus 10, a device 20, and an information management server 30. Each of the device 20 and the information management server 30 is connected to the information processing apparatus 10. Although not shown, these apparatuses are connected to a network and can communicate with each other through the network. Examples of the network include the Internet, a local area network (LAN), and a wide area network (WAN).

The device 20 is a multifunction device in which functions such as a copier, a printer, an image scanner, and a facsimile are integrated into one. The device 20 is a device having various functions. In addition to the functions provided in advance, an application can be installed at any time to add a new function.

In a case where the application is installed on the device 20, information related to the license issued at the time of purchasing the application is input. The information related to the license is information for authentication. For example, in a case where authentication is performed between an application seller and a purchaser with inputting of a predetermined number, text, symbol, or the like as a license key and the authentication is successful, the application can be installed on the device 20. In the present exemplary embodiment, the inputting of the information related to the license into the device 20 is expressed as employment of the license. The device 20 may be any device, such as a smartphone, a personal computer, or a server, on which an application authenticated by the license key can be installed, other than an image forming apparatus such as the multifunction device.

The device 20 holds device information. An example of the device information includes information related to the device 20 such as an ID of the device 20, information about an administrator who manages the device 20, and information related to use frequency of the device 20. The device 20 is interconnected with the information processing apparatus 10 in order to transmit the held device information to the information processing apparatus 10 and receive the license employment and the like in accordance with the installation of the application from the information processing apparatus 10. As shown in Fig. 1, the information processing apparatus 10 can communicate with a plurality of devices 20 at the same time.

The information management server 30 is an apparatus that manages information related to management authority and the license information. The information management server 30 transmits the information related to the management authority and the license information to the information processing apparatus 10, and receives communication, an instruction, and the like from the information processing apparatus 10.

The information management server 30 holds, as the information related to the management authority, information about a user name of the administrator of the device 20, the device 20 managed by each administrator, and the license held by each administrator, for example. Examples of the license information include a name and type of the application based on the license, a form of the license, the administrator holding the license, a version of the application, a target model, and an access destination in a case where the application is installed. In the present exemplary embodiment, the administrator of the device 20 is expressed as a user. The management of the device by the administrator means that the administrator determines whether or not to employ the license to the device.

Next, a case where the license is employed for the device 20 and the application is installed will be described. Fig. 2 is a diagram showing an example of the employment of the license by a serial license method. As described above, one of the license employment methods for executing the application is the serial license method in which one license is employed for each device.

Fig. 2 shows users as U1, U2, and U3. A dotted line 40 surrounding each of the users U1, U2, and U3 at the center represents the management authority. Hereinafter, the management authority is expressed as management authority 40. The management authority 40 represents which device 20 is under the management of which user among the plurality of users for the plurality of devices 20, which are management targets of the users. In Fig. 2, as an example, the user U1 manages five devices 20A to 20E, the user U2 manages three devices 20F to 20H, and the user U3 manages three devices 20I to 20K. Hereinafter, in a case where the devices 20 are described in a distinguished manner, the devices are expressed as the devices 20A to 20K. Each user holds a license 50 for installing the application on the device 20. As an example, the user U1 holds licenses 50a to 50c, the user U2 holds licenses 50d to 50f, and the user U3 holds licenses 50g to 50j. Hereinafter, in a case where the licenses 50 are described in a distinguished manner, the licenses are expressed as the licenses 50a to 50j .

In the serial license method, each user explicitly selects the device 20 and assigns and employs the license 50 according to the number of devices 20 managed and the number of licenses 50 held. However, as shown in Fig. 2, the user U1 has five devices 20 to be managed while the user holds three licenses 50. Therefore, the user has two surplus devices 20 for which the license 50 is not employed. The license 50 is not employed for the surplus devices 20D and 20E. In other words, under the management of user U1, the license 50 is insufficient. On the other hand, the user U3 has three devices 20 to be managed while the user holds four licenses 50. Therefore, the user has one surplus license 50j. Therefore, the license 50j of the purchased application is left over without being used. In the example shown in Fig. 2, both the users U1 and U3 waste the device 20 and the license 50.

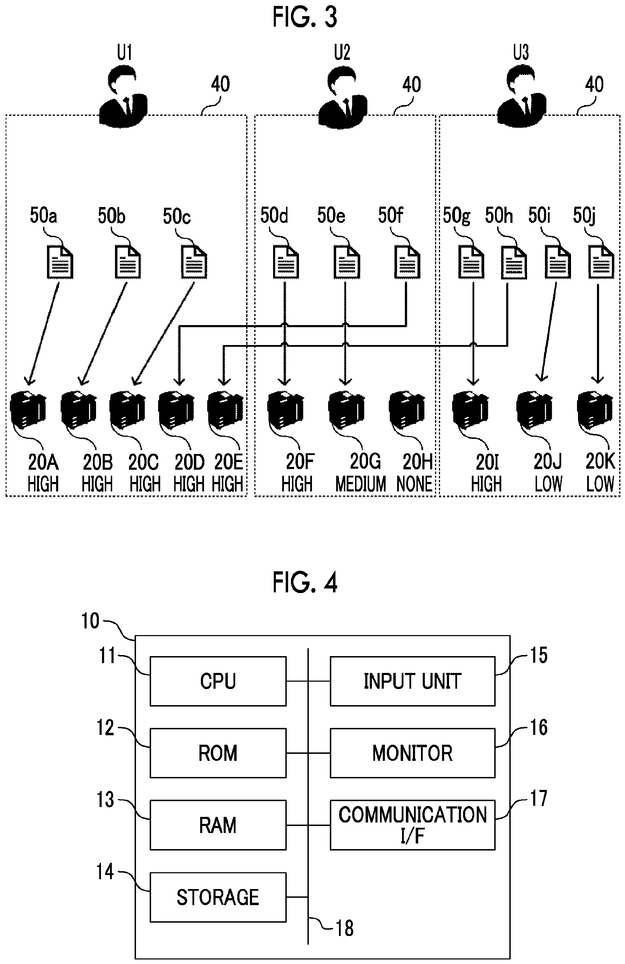

Next, a case where the license 50 is employed for the device 20 using the information processing apparatus 10 according to the present exemplary embodiment and the application is installed will be described. Fig. 3 is a diagram showing an example of employment of the license 50 using the information processing apparatus 10. In the example of Fig. 3, each management situation of the users U1 to U3, the devices 20A to 20K, and the licenses 50a to 50j is the same as the management situation of Fig. 2. However, the example of Fig. 3 differs from the example of Fig. 2 in the following two points. The first is that the license 50 is also employed for the devices 20D and 20E, that is, all the licenses 50a to 50j are employed for any one of the devices 20A to 20K. The second is that the licenses 50f and 50h are employed for the devices 20D and 20E under the management of the user U1. That is, the licenses 50f and 50h are not employed for any one of the devices 20F to 20H or the devices 201 to 20K, which are under the management of the users U2 and U3 who originally hold the licenses 50f and 50h.

As shown in Fig. 3, with use of the information processing apparatus 10 according to the present exemplary embodiment, the license 50 can be employed for the device 20 selected beyond a frame of the management authority 40 of the device 20. Therefore, the license 50 can be effectively used as compared with the case where the license 50 is employed only for the device 20 managed by the user within the frame of the management authority 40 of the device 20. A method of employing the license 50 will be described below.

Next, a configuration of the information processing apparatus 10 will be described with reference to Fig. 4. Fig. 4 is a block diagram showing an example of a hardware configuration of the information processing apparatus 10 according to the present exemplary embodiment. As an example, the information processing apparatus 10 according to the present exemplary embodiment will be described as a terminal such as a personal computer. However, the present invention is not limited thereto. The information processing apparatus 10 may be mounted on the image forming apparatus, such as the multifunction device, which is the device 20.

As shown in Fig. 4, the information processing apparatus 10 according to the present exemplary embodiment includes a central processing unit (CPU) 11, a read only memory (ROM) 12, a random access memory (RAM) 13, a storage 14, an input unit 15, a monitor 16, and a communication interface (communication I/F) 17. The CPU 11, the ROM 12, the RAM 13, the storage 14, the input unit 15, the monitor 16, and the communication I/F 17 are each connected by a bus 18. Here, the CPU 11 is an example of a processor.

The CPU 11 integrally controls the entire information processing apparatus 10. The ROM 12 stores various programs, data, and the like including an information processing program used in the present exemplary embodiment. The RAM 13 is a memory used as a work area in a case where various programs are executed. The CPU 11 expands the program stored in the ROM 12 into the RAM 13 and executes the program to perform processing of displaying each image and a text string. The storage 14 is, for example, a hard disk drive (HDD), a solid state drive (SSD), or a flash memory. The information processing program and the like may be stored in the storage 14. The input unit 15 is a mouse, a keyboard, or the like that receives a text input or the like. The monitor 16 displays each screen. The communication I/F 17 transmits and receives data.

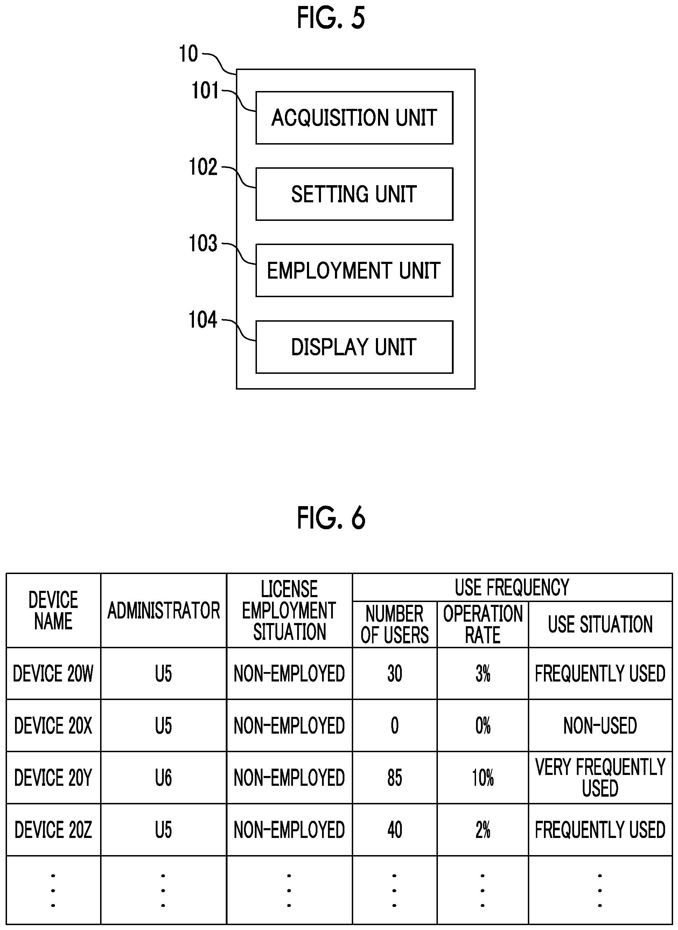

Next, a functional configuration of the information processing apparatus 10 will be described with reference to Fig. 5. Fig. 5 is a block diagram showing an example of the functional configuration of the information processing apparatus 10 according to the present exemplary embodiment.

As shown in Fig. 5, the information processing apparatus 10 includes, as the functional configuration, an acquisition unit 101, a setting unit 102, an employment unit 103, and a display unit 104. The CPU 11 executes the information processing program to function as the acquisition unit 101, the setting unit 102, the employment unit 103, and the display unit 104.

The acquisition unit 101 acquires the information related to the management authority 40 representing which device 20 is under the management of which user among the plurality of users for the plurality of devices 20 to be managed.

As shown in Figs. 2 and 3, the management authority 40 represents which device 20 is under the management of which user, and the acquisition unit 101 acquires the information related to the management authority 40 from the information management server 30. Fig. 6 is a table showing an example of the information related to the management authority 40 in each device 20. The acquisition unit 101 acquires information about which user manages for each device 20. In the example of Fig. 6, the user U5 or U6 is associated with device names of a device 20W, a device 20X, ···, and the like as the ID of each device 20. In the example of Fig. 6, the device 20 and the user are associated with each other on a one-to-one basis. However, the plurality of users may be registered as administrators for one device 20 or the information related to the management authority 40 may include an employment situation of the license 50 for each device 20.

The acquisition unit 101 acquires the license information representing the license 50 of the application owned by each of the plurality of users.

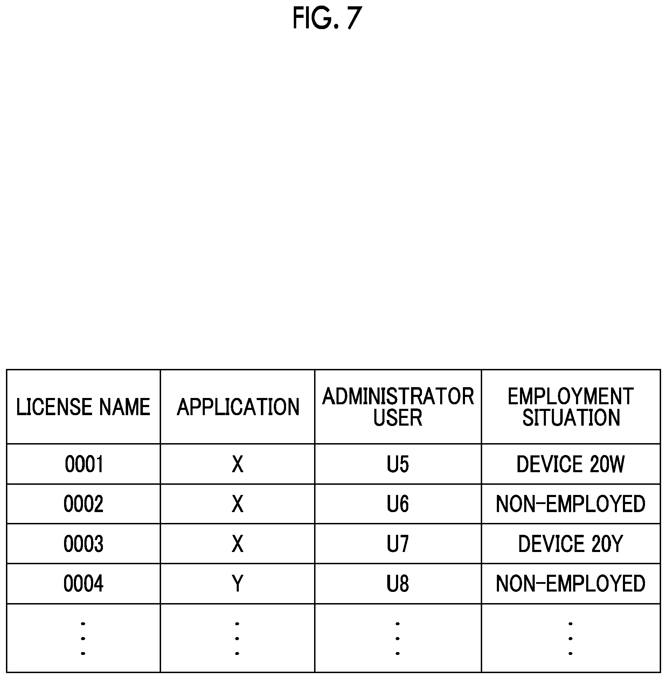

The license information is, for example, the name and type of the application, the user of the license 50, the version of the application, and the access destination in a case where the application is installed. Fig. 7 is a table showing an example of information related to the license 50. In Fig. 7, the name and type of the application, the user holding each license 50, and the employment situation of each license 50 corresponding to license names 0001, 0002, ···, and the like as the ID of the license 50 are recorded as examples of the information related to the license 50. The acquisition unit 101 acquires the license information from the information management server 30.

The setting unit 102 sets the employment priority to employ the license 50 of the application to be installed and used for the plurality of devices 20.

The employment priority is a standard used for selecting the device 20 for which the license 50 is employed in a case where the assignment of the license 50 is performed at the time of employing the license 50. In Fig. 3, the employment priority is indicated by "high", "medium", "low", and "none" for each of the devices 20A to 20K. In the present exemplary embodiment, the employment priority has four levels in the order of "high", "medium", "low", and "none". The license 50 is preferentially assigned to the device 20 set with the employment priority of "high" among the plurality of devices 20. In a case where there is the license 50 remaining after the license 50 is employed for the device 20 set with the employment priority of "high", the remaining license 50 is employed for the devices 20 set with the employment priority of "medium", "low", and "none". Also in Fig. 3, the license 50 is employed for all the devices 20 set with the employment priority of "high". However, there is no surplus license 50 after the license 50 is employed in the order of employment priority "high", "medium", and "low". Therefore, the license 50 is not employed for the device 20H set with the employment priority of "none".

The setting unit 102 sets the employment priority based on the use frequency of the device 20.

In the example shown in Fig. 6, as an example of the information related to the management authority 40, information related to a use record of each device 20 is recorded as the use frequency, in addition to the user information related to each device 20 and the information of the license employment situation. The setting unit 102 sets the employment priority based on the use frequency of the device 20, based on the information related to the management authority 40 acquired by the acquisition unit 101.

The setting unit 102 sets the use frequency of the device 20 based on at least one of the number of users, operation rate, or use situation of the device 20.

In the example shown in Fig. 6, the acquisition unit 101 acquires the use frequency of the device 20 included in the information related to the management authority 40 as the number of users, the operation rate, and the use situation. The number of users is information that the number of users who use the device 20 is cumulatively recorded, and the user may include the administrator. The operation rate is information obtained by calculating a ratio of a time for which the device 20 executes the function to a time for which power supply is turned on. The use situation is an item input by the user. In the example of Fig. 6, the use situation is described in three levels of "very frequently used", "frequently used", and "non-used". The use situation is an item that the user can randomly input, and the number of levels and variations may be increased such as "not used much", not limited to the example of Fig. 6. The information related to the use record of the device 20 referred to as the use frequency may not be limited to the three items of the number of users, the operation rate, and the use situation. In the present exemplary embodiment, the setting unit 102 sets the use frequency of the device 20 based on at least one of the number of users, operation rate, or use situation of the device 20. Therefore, the use frequency of the device 20 can be calculated by combining any of a plurality of items.

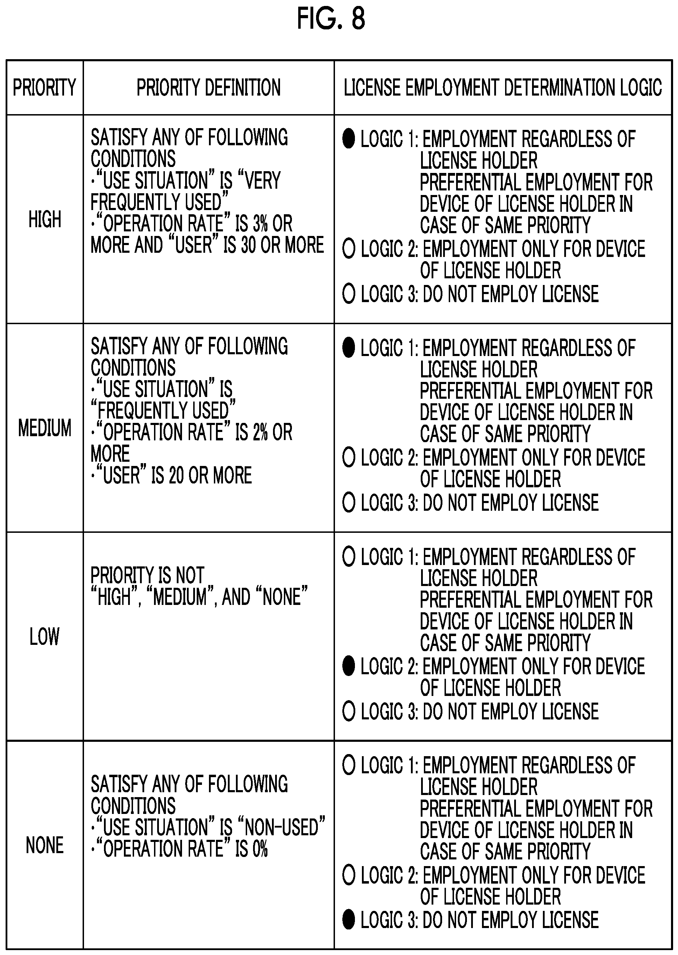

Fig. 8 is a table showing an example of information related to setting of the employment priority. In the example of Fig. 8, the employment priority is set to four levels of "high", "medium", "low", and "none". Which device 20 is to be set with which employment priority is set by the setting unit 102 based on the information related to the setting of the employment priority acquired by the acquisition unit 101. In Fig. 8, "priority definition" and "license employment determination logic" are respectively defined for the employment priority "high", "medium", "low", and "none".

The "priority definition" is a definition of the employment priority using the use frequency of the device 20. For example, the employment priority "high" is set in a case where any one of a case where "use situation" is "very frequently used" or a case where "operation rate" is 3% or more and "user" is 30 or more is satisfied. In the "priority definition" in Fig. 8, the user can randomly change or delete a condition. For example, the priority definition of the employment priority "medium" is defined as satisfying any one of three conditions, but may be defined only in a case where all three conditions are satisfied. A numerical value and the like in each condition may be changed. The condition can be added and deleted.

Further, the "license employment determination logic" is also used for the setting of the employment priority. As shown in Fig. 8, the license employment determination logic can be selected from each of three logics for each of the employment priority "high", "medium", "low", and "none". For example, the employment of the license regardless of a license holder is set in logic 1. That is, as the logic 1 is set, the device 20 for which the license 50 is employed is selected according to the high or low employment priority beyond the frame of the management authority 40. However, as shown in Fig. 8, even in a case where the logic 1 is set, in a case where the devices 20 having the same employment priority are present, the license 50 is preferentially employed for the device 20 within the management authority 40 of the license 50 holder.

There are three types of "license employment determination logic" shown in Fig. 8. However, the present invention is not limited thereto, and the user may change or the like a content of the logic as appropriate. As shown in Fig. 8, the "license employment determination logic" may not be employed uniformly for all pieces of the employment priority. The "license employment determination logic" can be set for each of the employment priority "high", "medium", "low", and "none". Therefore, in the example of Fig. 8, the logic 1 is employed for the employment priority "high" and "medium". However, the logic 2 is employed for the employment priority "low" and the logic 3 is employed for the employment priority "none".

The setting unit 102 sets the employment priority according to the use frequency of the device 20 in a predetermined period.

The setting unit 102 sets a period for calculating the use frequency of the device 20 used in a case where the employment priority is set in advance, for example, the last three months. Therefore, the setting unit 102 can set the employment priority based on the use frequency according to the latest situation.

The setting unit 102 receives update of the employment priority and sets the employment priority according to the use frequency of the device 20 in the predetermined period based on the change of the employment priority.

The setting unit 102 receives the update for changing the employment priority in accordance with the use frequency of the device 20 in the predetermined period. As described above, the user can randomly change the "priority definition" and the "license employment determination logic" related to the setting of the employment priority. Therefore, with the update of the employment priority by the setting unit 102, the employment priority that reflects intention of the user according to the latest situation can be set.

The setting unit 102 sets a range in which the license 50 of the application owned by the user can be employed for the device 20 other than the device 20 under the management of the user for each application or each device 20.

In the employment of the license 50 in the present exemplary embodiment, the range in which the license 50 of the application owned by the user can be employed for the device 20 other than the device 20 under the management of the user may be set for each device 20. The range in which the license 50 of the application owned by the user can be employed for the device 20 other than the device 20 under the management of the user may be set for each license 50 of the application owned by the user. For example, a certain license 50 may be permitted to be employed beyond the frame of the management authority 40, and the other license 50 may not be permitted to be employed beyond the frame of the management authority 40.

The employment unit 103 employs the license 50 owned by a first user for a device other than a device under the management of the first user among the plurality of users, according to the employment priority.

The employment unit 103 employs the license 50 for the device 20 under the management of the user other than the user who holds the license 50, according to the employment priority set by the setting unit 102. For example, in the example shown in Fig. 3, in a case where the first user is the user U2, the license 50f held by the user U2 is originally employed for the device 20 held by the user U2. However, the employment unit 103 employs the license 50f held by the user U2 for the device 20D managed by the user U1, which is the device 20 other than the devices 20F to 20H held by the user U2. That is, the license 50f is employed, by the employment unit 103, for the device 20D for which none of the licenses 50 is employed. Therefore, the license 50 can be employed for the device 20 selected beyond the frame of the management authority 40 of the device 20.

The employment unit 103 employs the license 50 owned by the first user for a second device 20 in a case where the employment priority set for a first device 20 under the management of the first user is lower than the employment priority of the second device 20 under the management of the second user among the plurality of users.

In the example shown in Fig. 3, in a case where the first user is the user U2 and the second user is the user U1, the employment priority set for the device 20H for which the license 50f held by the user U2 is originally employed is "none". In a case where the second device 20D under the management of the user U1 who is the second user among the plurality of users is compared with the device 20 H, the employment priority "none" set for the device 20H is lower than the employment priority "high" set for the device 20D. Therefore, the employment unit 103 employs the license 50f held by the user U2, which is the first user, for the device 20D managed by the user U1, which is the second device 20, beyond the frame of the management authority 40.

The employment unit 103 cancels the employment of the license 50 for a third device 20 in a case where the license 50 is already employed for the third device 20 among the plurality of devices 20 before the license 50 is employed and in a case where the employment priority set for the third device 20 is lower than the employment priority set for a fourth device 20 for which the license 50 is not employed among the plurality of devices 20.

In the example of Fig. 2, the license 50f is already employed for the device 20 H. However, in the example of Fig. 3, the employment priority of the device 20H is set as "none", and the employment priority of the device 20D for which none of the license 50 is employed is set as "high". In this case, for example, the third device 20 is 20H and the fourth device is 20D. In a case where the device 20H which is the third device 20 is compared with the device 20D which is the fourth device 20, the employment priority set for the third device 20H is lower than the employment priority set for the fourth device 20D for which the license 50 is not employed among the plurality of devices 20. Therefore, in this case, the employment unit 103 cancels the employment of the license 50 for the third device 20 H.

The employment unit 103 employs the license 50 for which the employment is canceled, for the fourth device 20.

In the above example, the employment unit 103 employs the license 50f for which the employment for the device 20H is canceled, for the fourth device 20D. Even for the license 50 which is already employed for any device 20, the license 50 can be employed again for another device 20 by reassigning the license.

The display unit 104 displays a warning to the user having the management authority 40 for the predetermined period, before the employment of the license 50 is canceled.

In a case where the employment unit 103 cancels the employment of the license 50 of any device 20, the display unit 104 displays the warning to the user having the management authority 40 of the device 20 to be canceled from the employment of the license 50, for the predetermined period. For example, in the above example, in a case where the employment unit 103 cancels the employment of the license 50 for the third device 20 H, the display unit 104 displays a predetermined warning to the user U2 having the management authority 40 of the device 20 H.

An example of a warning content includes an attentional display of the fact that the license 50 is canceled after a predetermined number of days. In addition, examples of the warning content include a display that informs the administrator of the device 20 whether or not the change of the license 50 employment setting to prevent the execution of the license 50 cancellation is necessary and a display that requests consent and execution of the immediate cancellation of the license 50. The example of the warning content may include a display of notification that the canceled license 50 is newly employed for which device 20. In displaying the warning, not only the display of the warning on the monitor 16 but also individual notification to the user and another user associated with the device 20 by e-mail sending or the like may be performed.

The display unit 104 displays the license information and the information of the device 20 for which the license information is employed.

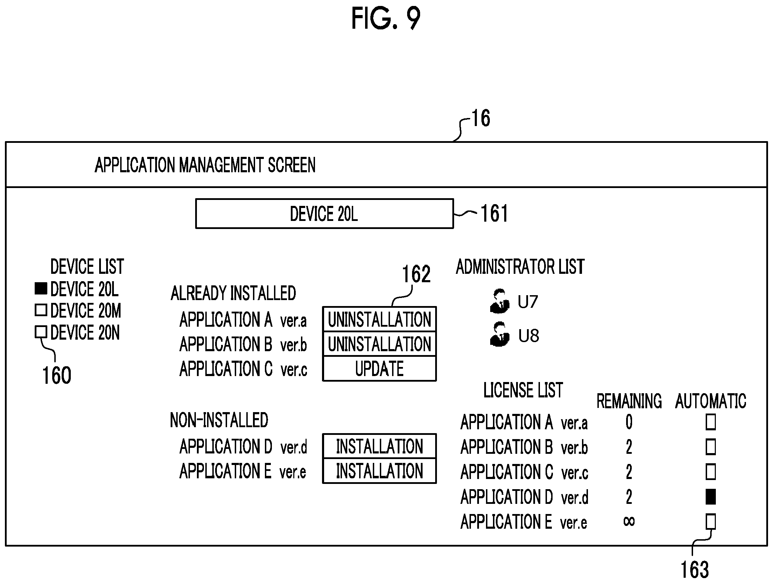

Fig. 9 is a diagram showing an example of a display on the monitor 16 by the display unit 104. In Fig. 9, "device list" is displayed on a left side. In the "device list", the devices 20 for which the license 50 is employed are displayed as a list. The list of devices 20 displayed in the "device list" is provided with "device checkboxes" 160. The device 20 selected in the "device checkbox" 160 is displayed in a "device name display box" 161 at an upper center portion of the monitor 16.

In the example of Fig. 9, information of the device 20 called "device 20L" is displayed as the information of the device 20 for which the license information is employed. The display unit 104 displays applications "application A", "application B", and "application C", which are already installed on the device 20, as the information of the device 20 selected in the "device checkbox" 160. Further, a list of applications "application D" and "application E", which are not installed on the device 20, is displayed as the information of the device 20 selected in the "device checkbox" 160. An "application operation box" 162 displayed at the center portion of Fig. 9 is a button for manually executing uninstallation, update, installation, and the like of each application displayed as a list. The user may manually perform the operations, such as uninstallation, update, installation, and the like, as appropriate on each application displayed as a list. The display unit 104 displays users U7 and U8 who are registered as the administrators of the "device 20L" as an administrator list at an upper right portion of the monitor 16.

Further, the display unit 104 displays "license list" as the license information. In the "license list" displayed at a lower right portion of Fig. 9, the version of each application and the number of remaining holdings are displayed. In a case where an "automatic employment checkbox" 163 described "automatic" on the right side of each application is checked, the application is automatically employed based on the employment priority of the device 20 selected in the "device checkbox" 160. In the case shown in Fig. 9, the "automatic employment checkbox" 163 of the "application D" is checked. The employment unit 103 automatically determines whether or not the license 50 is employed for "application D" based on the employment priority set for the device 20 called "device 20L" selected in the "device checkbox" 160, and the employment is performed.

In Fig. 9, the license information related to the license and the information of the device 20 for which the license information is employed are indicated with the device 20 selected by the "device checkbox" 160 as a display example. However, as another example of the license information to be displayed on the monitor 16 and the information of the device 20 for which the license information is employed, any one of the held licenses 50 may be selected in a checkbox or the like and then the license information related to the license and the information of the device 20 for which the license information is employed may be displayed.

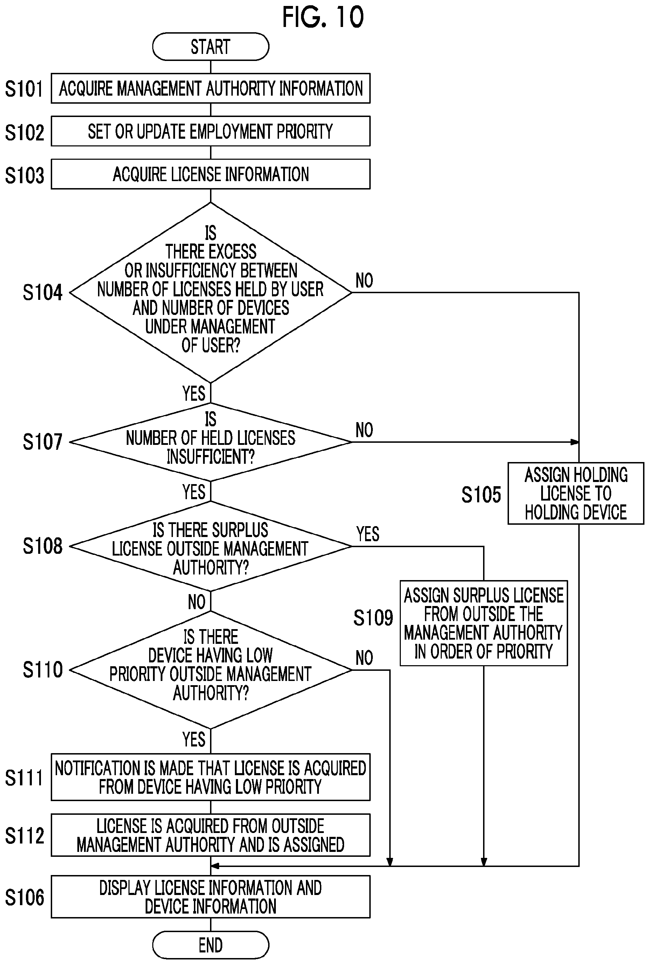

Next, an action of the information processing apparatus 10 according to the present exemplary embodiment will be described. Fig. 10 is a flowchart representing processing of the information processing apparatus 10 according to the present exemplary embodiment. The processing of the information processing apparatus 10 according to the present exemplary embodiment is executed by the CPU 11 reading the information processing program stored in the RAM 13 or the like.

In step S101, the CPU 11 acquires the information related to the management authority 40, as the acquisition unit 101.

In step S102, the CPU 11 sets or updates the employment priority, as the setting unit 102.

In step S103, the CPU 11 acquires the license information, as the acquisition unit 101.

In step S104, the CPU 11 compares the number of licenses 50 held by each user with the number of devices 20 under the management of each user. In a case where there is no excess or insufficiency between the number of licenses 50 held by each user and the number of devices 20 under the management of each user (step S104: NO), that is, in a case where the both numbers match, the processing proceeds to step S105. In a case where there is an excess or insufficiency between the number of licenses 50 held by each user and the number of devices 20 under the management of each user (step S104: YES), the processing proceeds to step S107. The excess or insufficiency between the number of held licenses 50 and the number of devices 20 under the management is different for each user. Therefore, in the following processing, the excess or insufficiency is checked for each user, and the processing after step S104 is executed for each user.

In step S105, the CPU 11 assigns the license 50 held by the user to the device 20 held by the user and employs the license 50, as the employment unit 103.

In step S106, the CPU 11 displays the license information and the information of the device 20 for which the license information is employed, as the display unit 104.

In step S107, the CPU 11 compares the number of licenses 50 held by the user with the number of devices 20 under the management of the user to determine whether or not the number of held licenses 50 is insufficient. In a case where there is no insufficiency in the number of held licenses 50 (step S107: NO), the processing proceeds to step S105. In a case where the number of held licenses 50 is insufficient (step S107: YES), the processing proceeds to step S108.

In step S108, the CPU 11 determines whether or not there is a surplus license 50 outside the management authority 40 of the user. In a case where there is a surplus license 50 outside the management authority 40 of the user (step S108: YES), the processing proceeds to step S109. In a case where there is no surplus license 50 outside the management authority 40 of the user (step S108: NO), the processing proceeds to step S110.

In step S109, the CPU 11 assigns the surplus license 50 outside the management authority 40 of a certain user to the device 20 within the management authority 40 in the order of employment priority and employs the license 50, as the employment unit 103.

In step S110, the CPU 11 determines whether or not there is the device 20 having low employment priority outside the management authority 40 of the certain user, as the acquisition unit 101. In a case where there is the device 20 having the low employment priority outside the management authority 40 of the certain user, the processing proceeds to step S112. In a case where there is no device 20 having the low employment priority outside the management authority 40 of the certain user, the processing proceeds to step S106.

In step S111, notification is made that the employed license 50 is canceled in ascending order of employment priority outside the management authority 40 of the certain user.

In step S112, the license 50 employed for the device 20 having the low employment priority outside the management authority 40 of the certain user notified in the previous step S111 is canceled. Thereafter, the license 50 is assigned to and employed for the device 20 having high employment priority for which the license 50 is not employed within the management authority 40 of the certain user.

As described above, with the information processing apparatus 10 according to the present exemplary embodiment, the license 50 can be employed for the device 20 selected beyond the frame of the management authority 40 of the device 20. Therefore, the license 50 can be effectively used as compared with the case where the license 50 is employed only to the device managed by the user.

As an effective use of the license 50, the use of the information processing apparatus 10 in the present exemplary embodiment is not limited to the case where a newly purchased license 50 is newly assigned to and employed for the device 20. In a case where the license 50 already employed for another device 20 is assigned to and employed again for a more appropriate device 20, the information processing apparatus 10 in the present exemplary embodiment may be used.

The information processing apparatus 10 in the present exemplary embodiment is not limited to use for the purpose of eliminating surplus resources due to a change in the number of devices 20 caused by a change in the use situation of the device 20 and the excess or insufficiency in the number of licenses 50. As an effective use of the license 50, even in a case where there is no excess or insufficiency in the number of devices 20 and the number of licenses 50, the license 50 may be assigned to and employed for a more appropriate device 20 in a case where there is the device 20 that is used extremely infrequently or the like.

In the present exemplary embodiment, the information processing program is installed in the RAM 13. However, the present exemplary embodiment is not limited thereto. The information processing program according to the present exemplary embodiment may be provided in a form recorded on a computer-readable storage medium. For example, the information processing program according to the present exemplary embodiment may be provided in a form recorded on an optical disk such as a compact disc (CD)-ROM and a digital versatile disc (DVD)-ROM, or may be provided in a form recorded on a semiconductor memory such as a universal serial bus (USB) memory and a memory card. The information processing program according to the present exemplary embodiment may be acquired from an external apparatus through a communication line connected to the communication I/F 17.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing apparatus
11: CPU
12: ROM
13: RAM
14: storage
15: input unit
16: monitor
17: communication I/F
18: bus
20: device
30: information management server
40: management authority
50: license
101: acquisition unit
102: setting unit
103: employment unit
104: display unit
160: device checkbox
161: device name display box
162: application operation box
163: automatic employment checkbox

## Claims

1. An information processing apparatus comprising:
a processor configured to:
acquire information related to management authority representing which device of a plurality of devices to be managed is under management of which administrator of a plurality of administrators;
set employment priority to employ a license of an application to be installed and used for the plurality of devices;
acquire license information representing the license of the application owned by each of the plurality of administrators; and
employ a license owned by a first administrator for a device other than a device under management of the first administrator among the plurality of administrators according to the employment priority.

2. The information processing apparatus according to claim 1, wherein the processor is configured to:
employ the license owned by the first administrator for a second device under the management of a second administrator among the plurality of administrators in a case where the employment priority set for a first device under management of the first administrator is lower than the employment priority of the second device.

3. The information processing apparatus according to claim 1 or 2, wherein the processor is configured to:
set the employment priority based on use frequency of the device.

4. The information processing apparatus according to claim 3, wherein the processor is configured to:
set the use frequency of the device based on at least one of the number of users, an operation rate, or a use situation of the device.

5. The information processing apparatus according to claim 3 or 4, wherein the processor is configured to:
set the employment priority according to the use frequency of the device in a predetermined period.

6. The information processing apparatus according to claim 5, wherein the processor is configured to:
receive update of the employment priority and set the employment priority according to the use frequency of the device in the predetermined period based on a change of the employment priority.

7. The information processing apparatus according to any one of claims 1 to 6, wherein the processor is configured to:
cancel the employment of the license for a third device among the plurality of devices in a case where the license is already employed, before the license is employed, for the third device and the employment priority set for the third device is lower than the employment priority set for a fourth device for which the license is not employed among the plurality of devices.

8. The information processing apparatus according to claim 7, wherein the processor is configured to:
display a warning to the administrator having the management authority for a predetermined period before the employment of the license is canceled.

9. The information processing apparatus according to claim 7 or 8, wherein the processor is configured to:
employ the license for which the employment is canceled, for the fourth device.

10. The information processing apparatus according to any one of claims 1 to 9, wherein the processor is configured to:
set a range in which the license of the application owned by the administrator is employable for the device other than the device under the management of the administrator for each application or each device.

11. The information processing apparatus according to any one of claims 1 to 10, wherein the processor is configured to:
display the license information and information on the device for which the license information is employed.

12. An information processing program causing a computer to execute a process comprising:
acquiring information related to management authority representing which device of a plurality of devices to be managed is under management of which administrator of a plurality of administrators;
setting employment priority to employ a license of an application to be installed and used for the plurality of devices;
acquiring license information representing the license of the application owned by each of the plurality of administrators; and
employing a license owned by a first administrator for a device other than a device under management of the first administrator among the plurality of administrators according to the employment priority.

13. An information processing method comprising:
acquiring information related to management authority representing which device of a plurality of devices to be managed is under management of which administrator of a plurality of administrators;
setting employment priority to employ a license of an application to be installed and used for the plurality of devices;
acquiring license information representing the license of the application owned by each of the plurality of administrators; and
employing a license owned by a first administrator for a device other than a device under management of the first administrator among the plurality of administrators according to the employment priority.
